# EUROPEAN PATENT SPECIFICATION

(11) **EP 2 915 776 B1**
(45) Date of publication and mention of the grant of the patent: **07.03.2018**
(21) Application number: 15157329.2
(22) Date of filing: 03.03.2015
(51) Int. Cl.: B67D 1/00, B67D 1/08

(54) **BEVERAGE INFUSING AND DISPENSING DEVICE**
GETRÄNKEINFUSION UND ABGABEVORRICHTUNG
DISPOSITIF DE DISTRIBUTION ET D'INFUSION DE BOISSON

(30) Priority: 03.03.2014 AU 2014900688
(43) Date of publication of application: 09.09.2015
(73) Proprietor: Andale Repetition Engineering Pty Ltd, Airport West, Victoria 3042 (AU)
(72) Inventor: Dale, Matthew James, Airport West, Victoria 3042 (AU)
(74) Representative: Jackson, Derek Charles

(56) References cited:
- WO-A1-2008/140331
- WO-A1-2011/130795
- WO-A1-2015/164166
- WO-A2-2014/062915
- AU-A1- 2008 207 387
- US-A- 1 780 687

## Description

### Technical Field

The present invention relates generally to a beverage dispensing device for dispensing a beverage such as beer, and in particular, to a beverage dispensing device being configured for dispensing a beverage and infusing the beverage with a flavour as part of the dispensing process.

### Background Art

Devices for dispensing beverages, such as beer, have been well established. Typically, draught beer is served in hotels and pubs and is served from a keg or cask, rather than from a bottle. The keg or cask is typically remotely located from the dispensing point, namely a beer font that consists of a beer tap and a dispensing handle. The beer is typically pressurised for delivery from the beer font and a variety of chilling systems have been developed to ensure that the beer dispensed from the tap of the beer font is at a desirable temperature.

Whilst draught beers are popular in pubs and clubs, there is limited opportunity to alter the taste of the beer prior to dispensing. In recent times there has been a growing trend for beer drinkers to move toward premium or boutique beer as an alternative to standard draught beers. Typically, boutique or premium beers are able to experiment with different tastes and flavours and may be crafted to enable infusing with a variety of different fruits and the like to enhance the flavour of the beverage and the overall drinking experience for the consumer.

Whilst the concept of infusing a beverage with fruits, herbs and the like has been well established, this is typically performed as a separate step in the process of production of the beverage. Many infused beers include the infusion process as part of the overall brewing process and as such, such beers are distributed to retailers for sale with the infusion process already performed. Alternatively, it is common for premium beers to be served with a slice of lemon or lime in order to enhance the flavour of the beer, and this is generally done by placing a slice of lemon or lime in the drink after dispensing the drink and immediately prior to consumption.

In recent times, the fonts for dispensing beers and other beverages in bars and hotels have become more visually and aesthetically appealing to improve the decor of the venue. In this regard, many fonts employ techniques to facilitate the formation of ice on the surfaces of the fonts or fonts may have distinctive shapes that are visually appealing and add to the overall aesthetics of the venue.

WO2011/130795 discloses a beer sampling system for sampling one or more beverages such as beer from a range of bottled beverages, the system including at least one beer sampling assembly having: a support base frame; a canister removably mounted on the support base frame, the canister having an inner transparent member and first and second transparent outer sleeve members, wherein the first outer sleeve member is adapted to receive a volume of bottled beer under pressure, and wherein the second outer sleeve member is adapted to receive and circulate a heat exchanging liquid to maintain the beer in the first outer sleeve at a drinking temperature; a tap mounted on the support base frame in liquid communication with the first outer sleeve of the canister for dispensing a sample of a beverage; a beverage clamp head interconnectable to both: a source of inert gas such as carbon dioxide and the first outer sleeve member of the canister; a refrigeration means for controlling the temperature of the heat exchanging liquid; a pumping means for pumping the heat exchanging liquid to the second outer sleeve member, wherein the second outer sleeve member, refrigeration means and pumping means form a circuit for flow of heat exchange fluid; an actuator means for operating the system; and wherein in an operating condition a bottle of beer is placed with an open end in the bottle receiving portion of the beverage clamp head, and the actuator means controls flow of inert gas such as carbon dioxide from a source of inert gas into the bottle via the siphon, and wherein beer from the bottle is transferred from the bottle to the first outer sleeve member where the beer is maintained under pressure in a sealed condition, and wherein a sample of the bottled beer can be obtained by operation of the tap.

WO2008/140331 describes a liquid infusing and flavouring device for the infusing and/or flavouring of liquids and which includes an inlet passage connectable to a liquid (typically beer) to allow liquid to flow into the device and an outlet passage to allow the liquid to flow out of the device and which is connectable to the inlet portion of a liquid dispensing tap. The liquid infusing and dispensing device has a container that houses the infusing and/or flavouring substance. The container is in selective fluid communication with the inlet and outlet passages and in order to allow the liquid to pass through the device there is situated between the inlet and outlet passages a three way valve operable between a non infusing-flavouring mode and an infusing-flavouring mode.

Thus, there is a need to provide a dispensing system for dispensing beer and other beverages that is able to be simply adapted to be used to infuse the beverage with a flavour as part of the dispensing process, preferably in a visually appealing manner.

The above references to and descriptions of prior proposals or products are not intended to be, and are not to be construed as, statements or admissions of common general knowledge in the art. In particular, the above prior art discussion does not relate to what is commonly or well known by the person skilled in the art, but assists in the understanding of the inventive step of the present invention of which the identification of pertinent prior art proposals is but one part.

### Summary of invention

The invention according to one or more aspects is as defined in independent claim 1. Some optional and/or preferred features of the invention are defined in the dependent claims.

According to the present invention there is provided a beverage dispensing device including: a body configured to receive and dispense a supply of draught beverage from a source, the beverage dispensing device including: a tap mounted thereto for dispensing said draught beverage; and an infusion
chamber, wherein the infusion chamber is mounted to said body so as to be positioned above said body, and wherein the infusion chamber defines an enclosed space for receiving one or more infusion products; and wherein the infusion chamber is openable so as to be filled with one or more infusion products; and wherein the infusion chamber is configured to receive the supply of draught beverage via a delivery pipe that projects from the body of the dispensing device to extend within the infusion chamber and terminate adjacent an upper region of the infusion chamber; and wherein the body has an outlet formed on an upper surface thereof for receiving the draught beverage present in the infusion chamber; and wherein the infusion chamber is in fluid communication with said body so as to receive the supply of draught beverage therefrom such that the beverage passes through said infusion chamber prior to being dispensed from the tap.

In one embodiment, the enclosed space of the infusion chamber is able to be maintained at a substantially constant temperature by a heat exchanger located wholly or partly within the body of the beverage dispensing device. Alternatively or additionally, the enclosed space of the infusion chamber may be able to be maintained at a substantially constant temperature by a heat exchanger located wholly or partly within the infusion chamber mounted to the body.

The heat exchanger may be associated with the body to chill the beverage prior to entering the infusion chamber.

The heat exchanger may include one or more of a glycol plate, an ice bank chiller, the lines associated with said glycol plate or said ice bank chiller, an in-line heat exchanger, or another conventional heat exchanger known to the person skilled in the art.

In one embodiment, the infusion chamber is substantially cylindrical.

The delivery pipe may be adapted to substantially fill the infusion chamber with beverage. In this way, the beverage may be maintained in the infusion chamber under pressure.

In one embodiment, the enclosed space of the infusion chamber includes an elongate cylindrical space, and a central pedestal extends from the surface of the body substantially centrally within the enclosed elongate cylindrical space of the infusion chamber. The pedestal has a threaded distal end that is configured to engage with a complementary internally threaded recess provided in an end cap such that the end cap is able to be tightened to about the cylindrical body to securely retain the cylindrical body in position on the upper surface of the body. The pedestal may comprise a hollow tube such that a coolant is able to be passed along inside the hollow tube of the pedestal to provide additional chilling of beverage present in the infusion chamber. Alternatively, a coolant may be able to be passed around the pedestal by tubing carrying the coolant wrapped around the pedestal to provide additional chilling of beverage present in the infusion chamber.

The infusion chamber may include a secondary pouring means to enable dispensing of the beverage directly from the infusion chamber, the secondary pouring means being located at or near an upper part of the infusion chamber. The infusion chamber optionally includes a pressure relief valve for releasing air pressure from the infusion chamber. The pressure relief valve may be a spring activated valve able to be pushed down to release air pressure from the infusion chamber. The pressure relief valve may be associated with a secondary pouring means to enable a portion of the beverage to be poured directly from the infusion chamber via the secondary pouring means when the pressure relief valve is activated.

The body of the dispensing device may be configured for installation on a bar, ledge or other platform suitable for beverage dispensing.

The body of the dispensing device may be configured for replacing an existing beverage dispensing font or being located beside an existing beverage dispensing font or fonts.

### Brief description of drawings

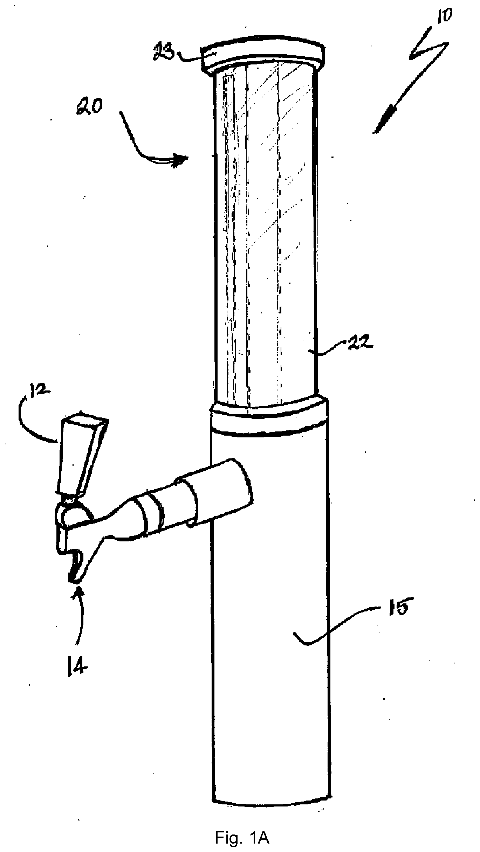

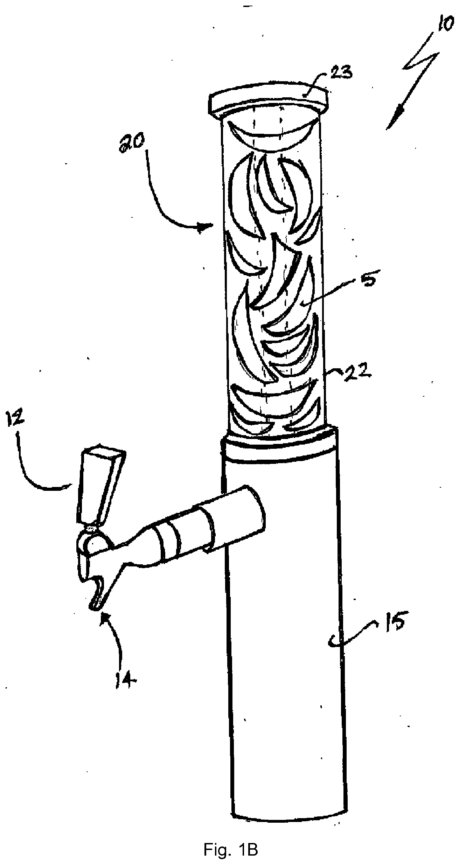

The invention may be better understood from the following non-limiting description of preferred embodiments, in which:Fig. 1A is a front perspective view of the beverage dispensing device in accordance with an embodiment of the present invention being used in a standard manner;Fig. 1B is a front perspective view of the beverage dispensing device of Fig. 1 being used in a flavour infusing manner;
Fig. 2 is a cross-sectional side view of the infusion chamber of the beverage dispensing device of Figs. 1 and 2; and
Fig. 3 is an enlarged view of a portion of the infusion chamber depicted in Fig. 2.

### Description of embodiments

Preferred features of the present invention will now be described with particular reference to the accompanying drawings. However, it is to be understood that the features illustrated in and described with reference to the drawings are not to be construed as limiting on the scope of the invention.

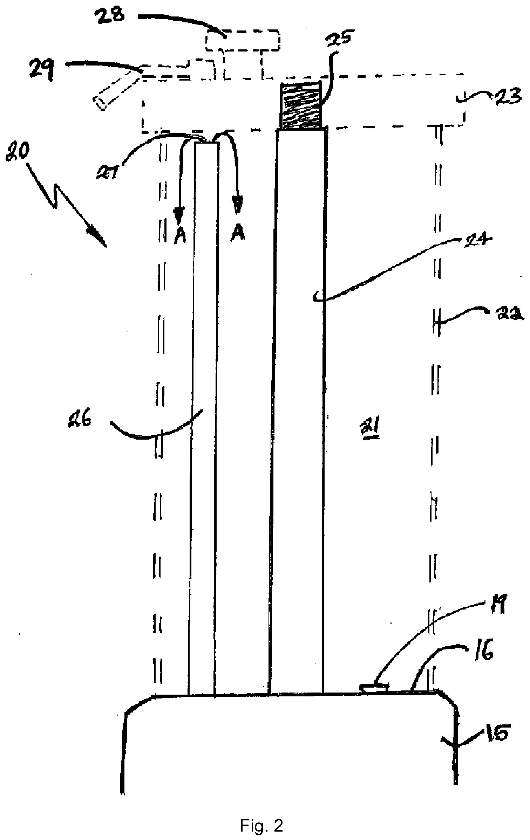

Referring to Figs. 1A and 1B, a beverage dispensing device 10 in accordance with a preferred embodiment of the present invention is shown. More particularly, Fig. 1A depicts a beverage dispensing device 10 where the infusion chamber 20 is filled with a beverage but does not have infusion products within the chamber. Fig. 2A depicts a beverage dispensing device 10 where the infusion chamber 20 is filled with a beverage and infusion products 5.

The present invention will be described in relation to the dispensing of beer, such as a draught beer. However, it will be appreciated that the present invention could be employed to dispense a variety of different types of beverages, such as cider, and non-alcoholic beverages, as will be appreciated by those skilled in the art.

The beer dispensing device, or font 10 generally includes a body 15 that is mounted on a bar or similar dedicated serving area such that the font is displayed in the manner as depicted in Figs. 1A and 1B. The body 15 is generally in the form of a stainless steel cylindrical tube that houses one or more beer lines (not shown) therein for supplying the beer to the font 10. The body 15 or infusion chamber 20 may also incorporate a heat exchanging device (not shown) for chilling the beer present in the beer lines as the beverage passes through the body 15 or infusion chamber 20. The heat exchanging device may be a glycol plate, an ice bank chiller, the lines associated with said glycol plate or said ice bank chiller, an in-line heat exchanger, or another conventional heat exchanger. It will be appreciated that there exist a number of systems for supplying draught beer from a keg located remotely from the font 10 in a pressurised and chilled manner. Most modern beer supply systems employ beer pythons that include a beer line bundled with a coolant line to ensure that the beer is kept at a substantially constant temperature as it travels from the keg, or storage unit, to the beer tap. These systems also function to reduce the growth of wild yeasts and bacteria within the beer lines, thereby reducing the potential of beer wastage as a result.

Whether via a heat exchanging device or a beer python type beer delivery system, having a heat exchanger in close proximity to the infusion chamber is important to enable the beer in the chamber to be held at a substantially consistent temperature and pressure. This, in turn, is important for limiting foaming of the beer within the device and/or hindering the infusion process within the infusion chamber, which may result from fluctuating temperatures and pressures of the beverage in the device, or from the infusing material and the beverage being at different temperatures.

A beer tap 14 is mounted to the body 15 in the manner as shown. The beer tap operates as a pouring means. The beer tap 14 includes a handle 12 that is able to open the tap to facilitate dispensing of the beverage from the tap 14 in a controlled manner. In the embodiment of the present invention as shown, only one beer tap 14 is depicted. However, it will be appreciated that multiple taps 14 may be mounted to the body 15 as desired, with each tap 14 having a dedicated beer line for delivering beer thereto and each tap having a handle 12 to be operated independently to dispense beer therefrom.

An infusion chamber 20 is mounted to the upper region of the body 15, as shown. As will be discussed in more detail below, the infusion chamber 20 includes a clear and see-through tubular body 22 that may be made from a plastic or glass material with an end cap 23 sealing the distal end thereof. The infusion chamber 20 is able to be opened so as to be filled with fruit or any other material that enables the beer being dispensed by the font 10 to be infused with the material contained therein immediately prior to dispensing from the tap 14. Fig. 1B depicts the font 10 filled with fruit 5, such as lemons or limes to facilitate infusing of the beer being delivered with a citrus flavour in the manner to be described in more detail below. It will be appreciated that other materials may be used for infusing other flavours into the beer, as desired.

As is depicted in Fig. 2, the infusion chamber 20 generally includes an elongate cylindrical space 21 that is defined by the cylindrical body 22. The tubular body 22 is mounted to the upper surface 16 of the body 15 and a central pedestal 24 extends from the surface of the body 15 substantially centrally within the space 21. The pedestal 24 has a threaded distal end that is configured to engage with a complementary internally threaded recess provided in the end cap 23 such that the end cap 23 is able to be tightened to about the cylindrical body 22 to securely retain the cylindrical body 22 in position on the upper surface 16 of the body 15.

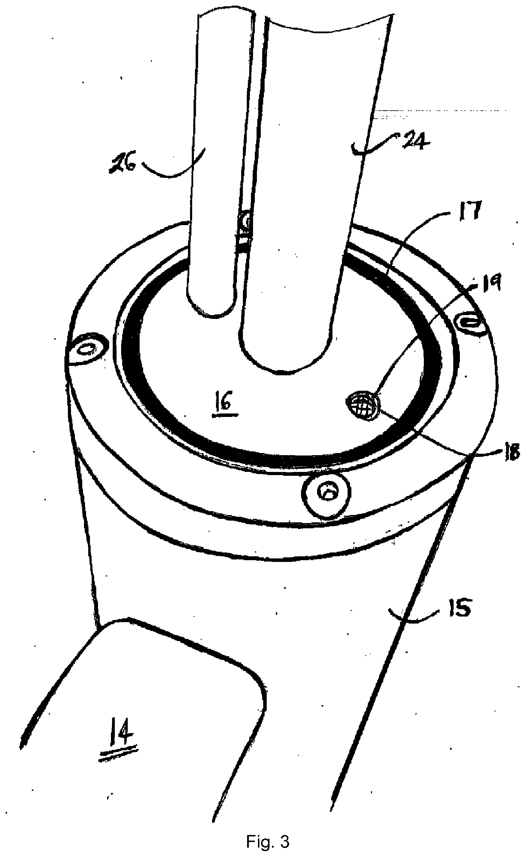

To ensure that the cylindrical body 22 is sealed at both its upper and lower ends, a seat is formed in both the underside of the end cap 23 (not shown) and the upper surface 16 of the body 15 to receive the ends of the cylindrical body 22. The seat 17 formed in the upper surface 16 of the body 15 is depicted in Fig. 3.

The seat 17 generally includes a circular groove or channel formed in the upper surface 16 which receives a rubber ring or gasket. A similar arrangement may be formed in the underside of the end cap 23 such that as the end cap 23 is screwed into position on the end of the pedestal 24, pressure is placed on the ends of the cylindrical body 22 to form a watertight seal at either end with the rubber ring or gasket formed in the seat 17. In this regard, when the body 22 is secured in position in such a manner, the space 21 becomes a substantially sealed and airtight space.

Referring again to Fig. 2, a delivery pipe 26 also extends from the upper surface 16 of the body 15 to extend substantially parallel to the pedestal 24. The delivery pipe 26 has an open end 27 that terminates before the end of the pedestal such that the delivery pipe 26 is able to deliver beer into the space 21 from an upper region thereof, in the direction of arrow 'A'. The other end of the delivery pipe 26 is in contact with the beer line (not shown) such that the beer is delivered into the space 21 under pressure and at a substantially constant delivery temperature. In this regard, the space 21 essentially fills with beer and is maintained at or close to the desired pressure such that the beer present in the space 21 is directly directed to the tap 14 for dispensing. To facilitate regulation of pressure within the space 21, a pressure relief valve 28 may be provided in the end cap 23 as shown.

The pressure relief valve 28 is a spring activated valve that can be pushed down to release air pressure from within the infusion chamber. The infusion chamber 20 further includes a secondary pouring means 29 associated with the pressure relief valve 28. The pouring means 29 is a curved pouring tube which extends from an upper part of the infusion chamber 20 and it is able to pour a portion of the beer directly from the infusion chamber when the pressure relief valve 28 is activated.

The manner in which the beer present in the space 21 of the infusion chamber 20 is directed to the tap 14 is shown in Fig. 3. In this regard, an outlet 18 is formed in the upper surface 16 of the body 15 which is directly connected to the tap 14 by way of a return tube (not shown). In this regard, as the tap 14 is opened, beer present in the return tube is delivered from the tap 14 which draws beer from the space 21 which is maintained at the desired delivery pressure and temperature. As the space 21 is pressurised, as the beer is consumed from the space 21 it is replaced by the beer present in the delivery pipe 26 which maintains the level of fluid in the space 21 at the desired pressure.

In accordance with the present invention, when the space 21 contains fruit 5 or other infusing material, the beer present in the space passes through the infusing material 5 as it passes from the open end 27 of the delivery pipe 26 to the outlet 18. This then enables the beer to be infused with the flavouring of the infusing material immediately prior to being dispensed from the tap 14. The amount of infusing material 5 present in the space 21 may vary in accordance with taste and flavouring requirements and as discussed previously, no infusing material needs to be present for the font 10 to function. If no infusing material 5 is used, the infusion chamber 20 will be filled with beer which will provide an interesting aesthetic effect, even without the presence of infusing material 5. Should infusing material 5 be used, a filter 19 may be provided over the outlet 18 to avoid any particulate material being dispensed from the tap 14, or entering the fluid line.

It will be appreciated that the temperature of the beer present in the infusion chamber 20 will be maintained at the desired delivery temperature due to the close proximity of the beverage with the heat exchanger and cooling lines provided with the beer delivery system. Should additional chilling or greater temperature control within the device be required, the pedestal 24 may comprise a hollow tube such that a coolant could be passed along inside the hollow tube of the pedestal 24 to provide additional chilling of the beer present in the infusion chamber 20. Alternatively, the coolant could be passed around the pedestal 24 by tubing carrying the coolant being wrapped around the pedestal.

By providing a heat exchanger, such as a chiller device associated with the font 10, the beverage and the infusing material is maintained in a chilled state thereby reducing the likelihood of foaming of the beverage occurring as it passes through the infusing material. This is a significant problem where infusing is applied whereby the infusing material and the beverage are at different temperature. The present invention addresses this issue by creating a chilled environment where the beverage and the infusing material are contained at a substantially constant pressure and temperature.

It will be further appreciated that the font 10 of the present invention provides a simple and effective device for infusing a beverage, such as beer, with a flavouring prior to dispensing the beverage. This is achieved in a simple and effective manner and provides a clear and striking visual impression of the process as it is being performed. A consumer is able to see the infusing process and immediately taste the result, which has considerable advantages in terms of marketing and visual effect.

Further to this, the device of the present invention can be simply disassembled from cleaning and replacement of the infusing material as desired, and can operate simply and effectively in the absence of an infusing material, as a conventional beer font.

The device is used by loading the infusion chamber 20 with an infusing material, supplying the beverage to the infusion chamber at a predetermined pressure and temperature to substantially fill the infusion chamber such that the infusion chamber is maintained at or close to the predetermined pressure and temperature, and releasing the beverage from the infusion chamber to be dispensed for consumption. The beverage may be released by opening the pouring means 14 in fluid communication with the infusion chamber to facilitate dispensing of the beverage under the predetermined pressure.

Throughout the specification and claims the word "comprise" and its derivatives are intended to have an inclusive rather than exclusive meaning unless the contrary is expressly stated or the context requires otherwise. That is, the word "comprise" and its derivatives will be taken to indicate the inclusion of not only the listed components, steps or features that it directly references, but also other components, steps or features not specifically listed, unless the contrary is expressly stated or the context requires otherwise.

Orientational terms used in the specification and claims such as vertical, horizontal, top, bottom, upper and lower are to be interpreted as relational and are based on the premise that the component, item, article, apparatus, device or instrument will usually be considered in a particular orientation, typically with the end cap of the device uppermost.

It will be appreciated by those skilled in the art that many modifications and variations may be made to the methods of the invention described herein without departing from the scope of the invention as defined in the appended claims.

## Claims

1. A beverage dispensing device (10) including: a body (15) configured to receive and dispense a supply of draught beverage from a source, the beverage dispensing device including: a tap (14) mounted thereto for dispensing said draught beverage; and an infusion chamber, whereby the infusion chamber defines an enclosed space (21) for receiving one or more infusion products; whereby the infusion chamber (20) is openable so as to be filled with one or more infusion products; and whereby the infusion chamber (20) is in fluid communication with said body (15) so as to receive the supply of draught beverage therefrom such that the beverage passes through said infusion chamber (20) prior to being dispensed from the tap (14), **characterised in that** the infusion chamber (20) is mounted to said body (15) so as to be positioned above said body; and **in that** the infusion chamber (20) is configured to receive the supply of draught beverage via a delivery pipe (26) that projects from the body (15) of the dispensing device (10) to extend within the infusion chamber (20) and terminate adjacent an upper region of the infusion chamber (20); and **in that** the body (15) has an outlet (18) formed on an upper surface (16) thereof for receiving the draught beverage present in the infusion chamber (20).

2. A beverage dispensing device (10) according to claim 1, wherein the enclosed space (21) of the infusion chamber (20) is able to be maintained at a substantially constant temperature by a heat exchanger located wholly or partly within the body (15) of the beverage dispensing device (10).

3. A beverage dispensing device (10) according to claim 1 or claim 2, wherein the enclosed space (21) of the infusion chamber (20) is able to be maintained at a substantially constant temperature by a heat exchanger located wholly or partly within the infusion chamber (20) mounted to the body (15).

4. A beverage dispensing device (10) according to claim 2 or claim 3, wherein the heat exchanger is associated with the body (15) to chill the beverage prior to entering the infusion chamber (20).

5. A beverage dispensing device (10) according to any one of the preceding claims, wherein the infusion chamber (20) is substantially cylindrical.

6. A beverage dispensing device according to any one of the preceding claims, wherein the delivery pipe (26) is adapted to substantially fill the infusion chamber (20) with beverage.

7. A beverage dispensing device (10) according to any one of the preceding claims, wherein the enclosed space (21) of the infusion chamber (20) includes an elongate cylindrical space, and further wherein a central pedestal (24) extends from the surface of the body (15) substantially centrally within the enclosed elongate cylindrical space (21) of the infusion chamber (20); and wherein the pedestal (24) has a threaded distal end that is configured to engage with a complementary internally threaded recess provided in an end cap (23) such that the end cap (23) is able to be tightened to about the cylindrical body (22) to securely retain the cylindrical body (22) in position on the upper surface (16) of the body (15).

8. A beverage dispensing device (10) according to claim 7, wherein the pedestal (24) comprises a hollow tube such that a coolant is able to be passed along inside the hollow tube of the pedestal (24) to provide additional chilling of beverage present in the infusion chamber (20).

9. A beverage dispensing device (10) according to claim 7, wherein a coolant is able to be passed around the pedestal (24) by tubing carrying the coolant wrapped around the pedestal (24) to provide additional chilling of beverage present in the infusion chamber (20).

10. A beverage dispensing device (10) according to any one of the preceding claims, wherein the infusion chamber (20) includes a secondary pouring means (29) to enable dispensing of the beverage directly from the infusion chamber (20), the secondary pouring means (29) located at or near an upper part of the infusion chamber.

11. A beverage dispensing device (10) according to any of the preceding claims, wherein the infusion chamber (20) includes a pressure relief valve (28) for releasing air pressure from the infusion chamber (20).

12. A beverage dispensing device (10) according to claim 11, wherein the pressure relief valve (28) is a spring activated valve able to be pushed down to release air pressure from the infusion chamber (20).

13. A beverage dispensing device (10) according to claim 11 or claim 12, wherein the pressure relief valve (28) is associated with a secondary pouring means (29) to enable a portion of the beverage to be poured directly from the infusion chamber (20) via the secondary pouring means (29) when the pressure relief valve (28) is activated.

## Patentansprüche

1. Getränkeabgabeeinrichtung (10), die Folgendes einschließt: einen Körper (15), der zur Aufnahme und zur Abgabe einer Zufuhr von gezapftem Getränk aus einer Quelle konfiguriert ist, wobei die Getränkeabgabeeinrichtung Folgendes einschließt: einen Hahn (14), der darauf befestigt ist, für die Abgabe des gezapften Getränks; und eine Infusionskammer, wobei die Infusionskammer einen geschlossenen Raum (21) zur Aufnahme von einem oder mehreren Infusionsprodukten definiert; wobei die Infusionskammer (20) öffenbar ist, um mit einem oder mehreren Infusionsprodukten gefüllt zu werden; und wobei die Infusionskammer (20) in Flüssigkeitsverbindung mit dem Körper (15) ist, um die Zufuhr von gezapftem Getränk daraus aufzunehmen, sodass das Getränk durch die Infusionskammer (20) läuft, bevor es aus dem Hahn (14) abgegeben wird, **dadurch gekennzeichnet, dass** die Infusionskammer (20) an dem Körper (15) befestigt ist, um über dem Körper positioniert zu werden; und dadurch, dass die Infusionskammer (20) zur Aufnahme der Zufuhr von gezapftem Getränk über eine Zuleitung (26) konfiguriert ist, die aus dem Körper (15) der Abgabeeinrichtung (10) herausragt, um sich innerhalb der Infusionskammer (20) zu erstrecken und benachbart zu einem oberen Bereich der Infusionskammer (20) zu enden; und dadurch, dass der Körper (15) einen Auslass (18) aufweist, der auf einer oberen Oberfläche (16) davon zur Aufnahme des gezapften Getränks, das in der Infusionskammer (20) vorliegt, ausgebildet ist.

2. Getränkeabgabeeinrichtung (10) nach Anspruch 1, wobei der geschlossene Raum (21) der Infusionskammer (20) bei einer im Wesentlichen konstanten Temperatur durch einen Wärmetauscher gehalten werden kann, der sich vollständig oder teilweise innerhalb des Körpers (15) der Getränkeabgabeeinrichtung (10) befindet.

3. Getränkeabgabeeinrichtung (10) nach Anspruch 1 oder Anspruch 2, wobei der geschlossene Raum (21) der Infusionskammer (20) bei einer im Wesentlichen konstanten Temperatur durch einen Wärmetauscher gehalten werden kann, der sich vollständig oder teilweise innerhalb der Infusionskammer (20) befindet, die an dem Körper (15) befestigt ist.

4. Getränkeabgabeeinrichtung (10) nach Anspruch 2 oder Anspruch 3, wobei der Wärmetauscher mit dem Körper (15) verbunden ist, um das Getränk vor dem Eintritt in die Infusionskammer (20) zu kühlen.

5. Getränkeabgabeeinrichtung (10) nach einem der vorstehenden Ansprüche, wobei die Infusionskammer (20) im Wesentlichen zylinderförmig ist.

6. Getränkeabgabeeinrichtung nach einem der vorstehenden Ansprüche, wobei die Zuleitung (26) geeignet ist, um die Infusionskammer (20) im Wesentlichen mit Getränk zu füllen.

7. Getränkeabgabeeinrichtung (10) nach einem der vorstehenden Ansprüche, wobei der geschlossene Raum (21) der Infusionskammer (20) einen länglichen zylinderförmigen Raum einschließt und weiter wobei sich ein zentraler Ständer (24) von der Oberfläche des Körpers (15) im Wesentlichen zentral innerhalb des geschlossenen länglichen zylinderförmigen Raums (21) der Infusionskammer (20) erstreckt; und wobei der Ständer (24) ein distales Ende mit Gewinde aufweist, das zum Eingreifen in eine komplementäre Vertiefung mit Innengewinde konfiguriert ist, die in einer Endabdeckung (23) bereitgestellt ist, sodass die Endabdeckung (23) mit etwa dem zylinderförmigen Körper (22) angezogen werden kann, um den zylinderförmigen Körper (22) auf der oberen Oberfläche (16) des Körpers (15) sicher in Position zu halten.

8. Getränkeabgabeeinrichtung (10) nach Anspruch 7, wobei der Ständer (24) ein hohles Rohr umfasst, sodass ein Kühlmittel innerhalb des hohlen Rohrs des Ständer (24) entlang laufen kann, um zusätzliche Kühlung von Getränk, das in der Infusionskammer (20) vorliegt, bereitzustellen.

9. Getränkeabgabeeinrichtung (10) nach Anspruch 7, wobei ein Kühlmittel um den Ständer (24) laufen kann, indem ein Rohr, das das Kühlmittel trägt, um den Ständer (24) gewickelt ist, um zusätzliche Kühlung von Getränk, das in der Infusionskammer (20) vorliegt, bereitzustellen.

10. Getränkeabgabeeinrichtung (10) nach einem der vorstehenden Ansprüche, wobei die Infusionskammer (20) ein sekundäres Gießmittel (29) einschließt, um die Abgabe des Getränks direkt aus der Infusionskammer (20) zu ermöglichen, wobei sich das sekundäre Gießmittel (29) an oder nahe eines oberen Teils der Infusionskammer befindet.

11. Getränkeabgabeeinrichtung (10) nach einem der vorstehenden Ansprüche, wobei die Infusionskammer (20) ein Druckentlastungsventil (28) zum Abbau von Luftdruck aus der Infusionskammer (20) einschließt.

12. Getränkeabgabeeinrichtung (10) nach Anspruch 11, wobei das Druckentlastungsventil (28) ein Feder-aktiviertes Ventil ist, das nach unten gedrückt werden kann, um Luftdruck aus der Infusionskammer (20) abzubauen.

13. Getränkeabgabeeinrichtung (10) nach Anspruch 11 oder Anspruch 12, wobei das Druckentlastungsventil (28) mit einem sekundären Gießmittel (29) verbunden ist, um zu ermöglichen, dass ein Teil des Getränks direkt aus der Infusionskammer (20) über das sekundäre Gießmittel (29) ausgegossen werden kann, wenn das Druckentlastungsventil (28) aktiviert ist.

## Revendications

1. Dispositif de distribution de boisson (10) incluant : un corps (15) configuré pour recevoir et distribuer un approvisionnement en boisson à la pression d'une source, le dispositif de distribution de boisson incluant : un robinet (14) monté sur lui pour distribuer ladite boisson à la pression ; et une chambre d'infusion, moyennant quoi la chambre d'infusion définit un espace renfermé (21) pour recevoir un ou plusieurs produits d'infusion ; moyennant quoi la chambre d'infusion (20) peut être ouverte de manière à être remplie d'un ou plusieurs produits d'infusion ; et moyennant quoi la chambre d'infusion (20) est en communication fluidique avec ledit corps (15) de manière à recevoir l'approvisionnement en boisson à la pression de celle-ci de sorte que la boisson passe à travers ladite chambre d'infusion (20) avant d'être distribuée depuis le robinet (14), **caractérisé en ce que** la chambre d'infusion (20) est montée sur ledit corps (15) de manière à être positionnée au-dessus dudit corps ; et **en ce que** la chambre d'infusion (20) est configurée pour recevoir l'approvisionnement en boisson à la pression par le biais d'un tuyau d'alimentation (26) qui fait saillie depuis le corps (15) du dispositif de distribution (10) pour s'étendre au sein de la chambre d'infusion (20) et se terminer de manière adjacente à une région supérieure de la chambre d'infusion (20) ; et **en ce que** le corps (15) a une sortie (18) formée sur une surface supérieure (16) de celui-ci pour recevoir la boisson à la pression présente dans la chambre d'infusion (20).

2. Dispositif de distribution de boisson (10) selon la revendication 1, dans lequel l'espace renfermé (21) de la chambre d'infusion (20) est capable d'être maintenu à une température essentiellement constante par un échangeur de chaleur situé entièrement ou partiellement au sein du corps (15) du dispositif de distribution de boisson (10).

3. Dispositif de distribution de boisson (10) selon la revendication 1 ou la revendication 2, dans lequel l'espace renfermé (21) de la chambre d'infusion (20) est capable d'être maintenu à une température essentiellement constante par un échangeur de chaleur situé entièrement ou partiellement au sein de la chambre d'infusion (20) montée sur le corps (15).

4. Dispositif de distribution de boisson (10) selon la revendication 2 ou la revendication 3, dans lequel l'échangeur de chaleur est associé au corps (15) pour refroidir la boisson avant de pénétrer dans la chambre d'infusion (20).

5. Dispositif de distribution de boisson (10) selon l'une quelconque des revendications précédentes, dans lequel la chambre d'infusion (20) est essentiellement cylindrique.

6. Dispositif de distribution de boisson selon l'une quelconque des revendications précédentes, dans lequel le tuyau d'alimentation (26) est adapté à essentiellement remplir la chambre d'infusion (20) de boisson.

7. Dispositif de distribution de boisson (10) selon l'une quelconque des revendications précédentes, dans lequel l'espace renfermé (21) de la chambre d'infusion (20) inclut un espace cylindrique allongé et dans lequel un socle central (24) s'étend en outre depuis la surface du corps (15) de manière essentiellement centrale au sein de l'espace cylindrique allongé renfermé (21) de la chambre d'infusion (20) ; et dans lequel le socle (24) a une extrémité distale filetée qui est configurée pour s'engager avec un retrait à filetage interne complémentaire prévu dans un capuchon d'extrémité (23) de sorte que le capuchon d'extrémité (23) est capable d'être serré autour du corps cylindrique (22) pour retenir fermement le corps cylindrique (22) en position sur la surface supérieure (16) du corps (15).

8. Dispositif de distribution de boisson (10) selon la revendication 7, dans lequel le socle (24) comprend un tube creux de sorte qu'un réfrigérant est capable d'être passé le long de l'intérieur du tube creux du socle (24) pour fournir un refroidissement supplémentaire de la boisson présente dans la chambre d'infusion (20).

9. Dispositif de distribution de boisson (10) selon la revendication 7, dans lequel un réfrigérant est capable d'être passé autour du socle (24) par du tubage transportant le réfrigérant enroulé autour du socle (24) pour fournir un refroidissement supplémentaire de la boisson présente dans la chambre d'infusion (20).

10. Dispositif de distribution de boisson (10) selon l'une quelconque des revendications précédentes, dans lequel la chambre d'infusion (20) inclut un moyen de versement secondaire (29) pour permettre la distribution de la boisson directement depuis la chambre d'infusion (20), le moyen de versement secondaire (29) étant situé au niveau ou près d'une partie supérieure de la chambre d'infusion.

11. Dispositif de distribution de boisson (10) selon l'une quelconque des revendications précédentes, dans lequel la chambre d'infusion (20) inclut une soupape de décharge (28) pour libérer de la pression d'air de la chambre d'infusion (20).

12. Dispositif de distribution de boisson (10) selon la revendication 11, dans lequel la soupape de décharge (28) est une soupape activée par un ressort capable d'être poussée vers le bas pour libérer de la pression d'air de la chambre d'infusion (20).

13. Dispositif de distribution de boisson (10) selon la revendication 11 ou la revendication 12, dans lequel la soupape de décharge (28) est associée à un moyen de versement secondaire (29) pour permettre à une portion de la boisson d'être versée directement depuis la chambre d'infusion (20) par le biais du moyen de versement secondaire (29) lorsque la soupape de décharge (28) est activée.
